# FASCICULE DE BREVET EUROPEEN

(11) **EP 0 461 956 B1**
(45) Date de publication et mention de la délivrance du brevet: **24.07.1996**
(21) Numéro de dépôt: 91401451.9
(22) Date de dépôt: 04.06.1991
(51) Int. Cl.: G11B 7/00, G11B 7/14, G11B 7/24, G11B 7/28

(54) **Stockage optique d'informations en strates superposées**
Optischer Informationsspeicher aus überlagerten Schichten
Optical information storage on superimposed layers

(30) Priorité: 12.06.1990 FR 9007284
(43) Date de publication de la demande: 18.12.1991
(73) Titulaire: THOMSON-CSF, 75008 Paris (FR)
(72) Inventeur: Puech, Claude, F-92045 Paris la Défense (FR); Huignard, Jean-Pierre, F-92045 Paris la Défense (FR); Papuchon, Michel, F-92045 Paris la Défense (FR)
(74) Mandataire: Guérin, Michel

(56) Documents cités:
- EP-A- 0 271 300
- EP-A- 0 414 380
- GB-A- 2 017 379
- US-A- 3 876 990
- US-A- 4 845 529
- PATENT ABSTRACTS OF JAPAN vol. 13, no. 17 (P-813)(3365) 17 janvier 1989, & JP-A- 63 220434 (MATSUSHITA ELECTRIC INDUSTRIAL CO.,LTD.) 13 septembre 1988,
- Eugene Hecht: "OPTICS", Addison-Wesley publishing company, second edition, 1987, ISBN 0-201-11609-X, pp.604, 606-608.

## Description

L'invention concerne le stockage de données par voie optique.

Un des buts de l'invention est de proposer un système de stockage de données ayant une capacité de stockage d'information encore plus élevée que dans les systèmes existant actuellement.

Un des systèmes qui permettent une capacité de stockage très élevée est le disque optique numérique. On peut stocker aujourd'hui par exemple 30 ou 45 minutes d'images vidéo dans un disque optique numérique de 30 centimètres de diamètre. Mais on ne pourrait stocker qu'une durée beaucoup plus réduite si les images stockées étaient des images de télévision haute définition. Pourtant, le principe du stockage sur disque optique serait très intéressant pour des images de télévision haute définition comme il l'est pour les systèmes de son et d'image classiques. On bénéficierait alors des avantages inhérents au système : lecture sans contact donc sans usure, accès aléatoire rapide par simple recherche d'une piste parmi un ensemble de pistes. Mais pour cela il faut une capacité de stockage plus élevée que celles qui existent actuellement.

Une amélioration des capacités de stockage est possible bien entendu en utilisant des lasers de lecture de plus courtes longueurs d'onde (par exemple 0,4 micromètre) que celles qui sont commercialement utilisées (0,7 micromètre environ). La limite de résolution spatiale est en effet d'autant plus élevée que la longueur d'onde est plus courte.

L'invention propose un moyen pour augmenter encore la capacité de stockage d'informations sous forme optique.

Selon l'invention, on propose de stocker des informations individuelles sous forme optique dans le volume d'une couche de matériau transparent, des séries d'informations différentes étant stockées dans des strates différentes de la couche, la lecture des informations d'une série étant effectuée par des moyens optiques aptes à focaliser un faisceau lumineux dans le plan d'une strate déterminée, choisie à volonté, sans le focaliser sur les autres strates.

Plus précisément, on propose selon l'invention un système de stockage optique d'informations, comprenant un support d'informations stockées en plusieurs strates dans ce support et des moyens de lecture de ces informations, ces moyens comportant des moyens optiques pour focaliser un faisceau lumineux sur une strate sélectionnée sans le focaliser sur les autres strates, caractérisé en ce que les strates d'information sont formées dans le volume d'une couche de matériau transparent à variation photoinduite d'un indice optique, les informations étant constituées par des modifications locales, dans lesdites strates, de l'indice optique du matériau.

L'invention concerne aussi un procédé d'écriture d'informations dans un tel système.

En d'autres termes, l'invention part de l'idée que les faisceaux lumineux qui sont utilisés pour la lecture de disques optiques sont très fins et sont focalisés par des objectifs à grande ouverture qui ont une profondeur de champ très faible. On met d'ailleurs classiquement à profit cette faible profondeur de champ en focalisant le faisceau à l'arrière d'une couche transparente de sorte que les impuretés (salissures, rayures, etc.) de la surface des disques ne sont pas "vues" par le faisceau qui n'est pas focalisé dans leur plan. Selon l'invention, on utilise le fait que la profondeur de champ est très faible pour superposer plusieurs strates d'informations, en prévoyant des moyens pour déplacer le plan focal de l'optique de lecture ou d'écriture de manière à permettre une focalisation sur une strate choisie parmi les strates superposées.

Il faut faire remarquer ici que le stockage d'images dans le volume d'une couche transparente existe déjà, mais sous forme d'hologrammes. Comme on le sait, les hologrammes sont des enregistrements de réseaux optiques dans des couches transparentes; ils permettent de reconstituer l'image visible d'un objet lorsqu'ils sont éclairés par une lumière cohérente à la longueur d'onde qui a servi à la formation des réseaux. Mais les hologrammes ne sont pas des moyens de stockage d'informations individuelles distinctes les unes de autres. Ils utilisent tout le volume d'une couche transparente pour stocker une image globale qui n'est pas dissociée en éléments d'information individuels et qui ne peut être restituée que globalement. L'invention s'intéresse au contraire uniquement au stockage d'informations point par point, c'est-à-dire un stockage dans lequel chaque élément d'information est autonome et a une signification propre qui peut être dissociée d'autres éléments d'informations et qui peut donc être lue séparément des autres.

On notera que le brevet GB-A-2 017 379 réfléchi par le préambule de la première revendication décrit un système de stockage multicouches qui est une simple superposition de disques optiques classiques avec inscription de chaque disque en surface puis empilement des disques; la lecture se fait par focalisation sur une interface sans focalisation sur les autres interfaces. Le brevet EP-A-0 414 380 (art antérieur non publié) décrit un système multicouches empilant des couches de stockage et des couches de séparation. Le brevet US 4 845 529 décrit un système de stockage multicouches mais sans focalisation du faisceau de lecture sur les strates individuelles.

On utilisera de préférence, pour le stockage d'informations en strates selon l'invention, une couche transparente en un matériau à variation photoinduite d'un indice de réfraction, du même genre que ceux qui sont utilisés pour les hologrammes.

Ces matériaux sont transparents et leur indice optique est susceptible de changer localement sous l'effet d'une concentration locale d'énergie lumineuse. Le changement d'indice est faible mais suffisant pour être détecté et permettre une lecture.

Les matériaux préférentiellement utilisés seront des matières photopolymérisables. Un des intérêts de ces matériaux est qu'ils peuvent enregistrer une information sous forme optique sans passer par une phase de développement chimique.

De préférence, l'une des strates d'informations constitue une piste de référence par rapport à laquelle les autres strates seront référencées. Cette strate peut être réalisée différemment des autres, et éventuellement par pressage classique à partir d'une matrice obtenue initialement par photogravure.

La couche de stockage sera formée de préférence sur un disque qui, en mode de lecture, sera mis en rotation au dessous d'une optique de focalisation de faisceau laser, cette optique étant apte à former des taches de focalisation à plusieurs profondeurs différentes au dessous de la surface du disque. Bien entendu, l'optique de focalisation est aussi déplaçable radialement par rapport au disque (d'une manière classique) pour assurer la lecture sur toute l'étendue radiale du disque.

Pour assurer la production en série de disques, on peut réaliser un disque maître comportant les différentes strates d'informations inscrites par un laser, réaliser un hologramme de l'image tridimensionnelle formée par la couche transparente contenant les informations en strates, puis reconstituer une image tridimensionnelle au moyen d'un faisceau laser éclairant l'hologramme et projeter l'image reconstituée sur une couche transparente à variation photoinduite de l'indice optique, de manière à créer dans cette couche des variations d'indice photoinduites reproduisant le motif d'informations contenues dans la couche correspondante du disque maître.

On notera que le brevet EP 0 271 300 décrit le principe d'enregistrement holographique de disques à partir d'un disque maître, mais pour des inscriptions en surface, pas en volume; il n'effectue pas d'enregistrements en strates différentes. Il utilise soit une résine photosensible, soit une couche photochromique, mais pas un matériau transparent à variation d'indice photoinduite.

En résumé l'invention présentée ici comporte plusieurs aspects : un nouveau système de stockage d'informations, mais bien sûr aussi un support de stockage d'informations en strates, un système de lecture correspondant qui permet la séparation des informations contenues dans des strates superposées, et également un procédé de réalisation en série des supports de stockage optique.

D'autres caractéristiques et avantages de l'invention apparaîtront à la lecture de la description détaillée qui suit et qui est faite en référence aux dessins annexés dans lesquels :
- la figure 1 représente globalement un disque optique selon l'invention;
- la figure 2 représente le principe de l'écriture d'informations par strates dans une couche épaisse;
- la figure 3 représente schématiquement une coupe de disque selon l'invention avec les informations enregistrées par strates;
- la figure 4 représente une vue en perspective correspondant à la figure 3;
- la figure 5 représente le système de lecture des informations enregistrées;
- la figure 6 explique schématiquement le principe d'une lecture différentielle.
- la figure 7 explique une méthode de lecture par réflexion préalable.

Le système d'enregistrement optique selon l'invention utilise, pour l'enregistrement initial des informations une couche épaisse de matériau transparent dans laquelle les informations individuelles seront disposées en strates superposées.

Par couche épaisse, on entend une couche d'épaisseur beaucoup plus grande que la tache de focalisation du faisceau laser qui servira à inscrire les informations. Comme on peut estimer que la tache de focalisation a des dimensions de l'ordre de grandeur de la longueur d'onde du faisceau (ou parfois même un peu moins), l'épaisseur de la couche sera d'au moins plusieurs dizaines de fois la longueur d'onde. Pour des longueurs d'onde lumineuses visibles, la tache de focalisation (qu'on cherche à réduire le plus possible) peut s'étendre sur des dimensions latérales de l'ordre du micromètre; l'épaisseur peut alors être de l'ordre d'une ou plusieurs centaines de micromètres.

Cette couche est de préférence formée sur un disque support plan qui pourra être mis en rotation autour d'un axe.

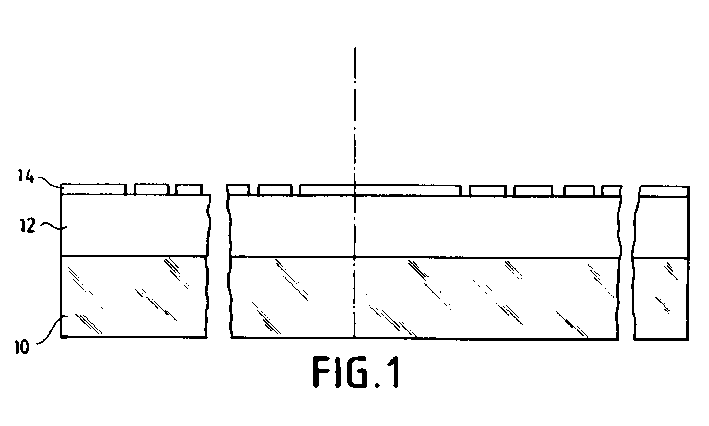

La figure 1 représente schématiquement le disque 10 avec la couche transparente 12 qui le recouvre. Le support est par exemple en verre. On peut éventuellement prévoir, entre le support 10 et la couche de stockage d'informations 12 une couche réfléchissante ou partiellement réfléchissante non représentée.

Le matériau de la couche 12 est, dans cette réalisation, un matériau photopolymérisable qui présente une variation d'indice photoinduite. Un faisceau laser d'énergie suffisante, focalisé sur une petite zone à l'intérieur de la couche peut modifier localement, dans cette zone, l'indice de réfraction de la couche. La variation d'indice peut aller jusqu'à 10%, voire même plus. La modification est fortement non linéaire, c'est-à-dire qu'il y a un seuil d'énergie en deçà duquel il n'y a pratiquement pas de variation et au delà duquel il y a une variation nette.

On va photoinduire des variations très localisées d'indice à différentes profondeurs au dessous de la surface du disque; les différentes profondeurs définissent des strates d'informations enregistrées. Les informations sont d'une certaine manière binaires, chaque modification locale d'indice représentant un bit d'information. Ceci n'exclut pas, bien entendu, qu'on envisage un stockage d'informations qui en fait sont analogiques : par exemple, l'information utile serait la longueur d'une zone présentant une modification locale d'indice, ou encore la distance séparant deux modifications locales successives d'indice.

Comme on l'expliquera plus loin, la couche transparente peut être recouverte d'une couche 14 de résine gravée comportant des informations et constituant par exemple une piste de référence pour la lecture des informations des strates intérieures.

Pour l'enregistrement d'informations, on utilise un stylet optique d'enregistrement comportant soit une optique déplaçable verticalement par rapport à la surface du disque, soit des moyens fixes pour produire plusieurs taches de focalisation à des profondeurs différentes.

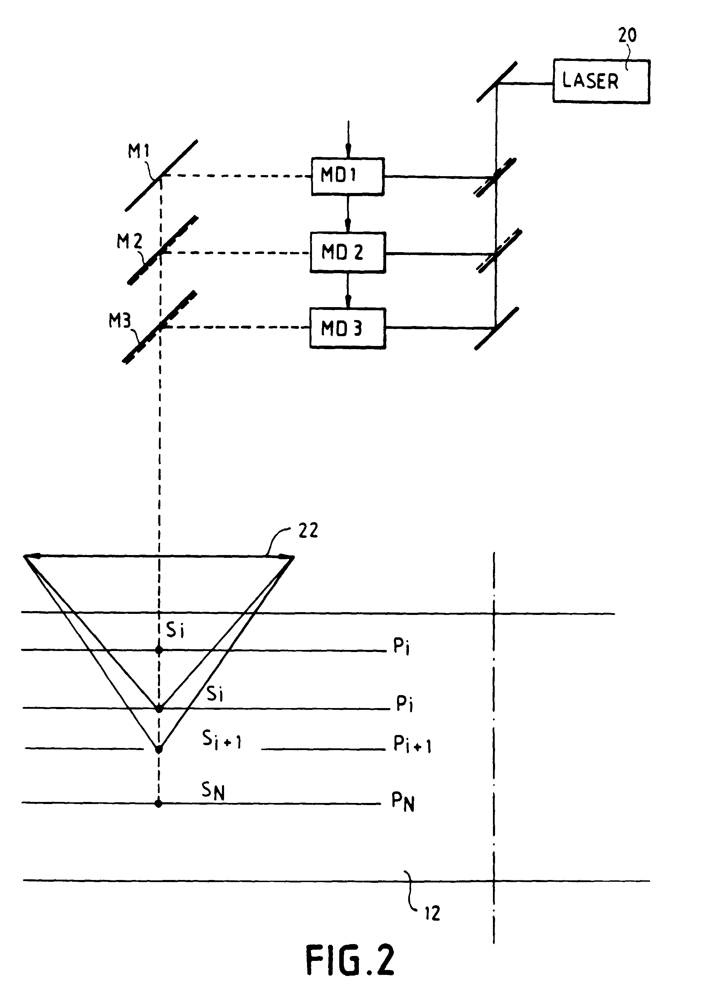

La figure 2 représente un exemple de réalisation des moyens d'enregistrement, avec un laser unique 20, des moyens pour diriger une partie du faisceau laser sur plusieurs miroirs partiellement transparents M1, M2, M3, situés à des hauteurs différentes au dessus de la surface du disque, et un objectif de focalisation 22 produisant des taches de focalisation très étroites (dimensions de l'ordre de la longueur d'onde ou la demi longueur d'onde du faisceau) à des profondeurs directement liées aux hauteurs respectives des miroirs au dessus du disque.

Par exemple, le faisceau renvoyé par le miroir M1 produit une tache Si dans un plan P1, le faisceau renvoyé par le miroir M2 produit une tache S2 dans un plan P2, etc.

Les hauteurs des miroirs sont calculées pour que les plans P1, P2, etc. soient séparés par des distances bien précises, de l'ordre de plusieurs dizaines de micromètres par exemple.

La couche transparente 12 se déplace en rotation au dessous du faisceau laser lorsque le disque tourne.

L'optique est déplaçable aussi radialement par rapport à l'axe du disque. De cette manière, toute la surface utile du disque peut être balayée par le faisceau laser d'enregistrement, et cela pour chacune des strates d'informations.

Des modulateurs de lumière (cellules de Pockels ou autre) sont interposés sur les trajets des faisceaux lasers correspondant à chacune des taches de focalisation. Ces modulateurs MD1, MD2, etc. correspondent donc aux diverses strates d'informations à enregistrer dans le volume de la couche 12. Ils sont commandés pour laisser passer ou interrompre le faisceau selon l'information à inscrire; une variation d'indice est produite ou n'est pas produite. Une synchronisation est prévue entre la commande de modulation et le déplacement relatif du disque et des taches de focalisation, pour que les informations soient inscrites avec une répartition spatiale bien déterminée.

L'espacement des points enregistrés est lié à la résolution du disque, c'est-à-dire en pratique à la dimension latérale des taches de focalisation qu'on peut produire avec l'objectif 22. Deux points doivent être séparés par une distance de l'ordre de cette dimension latérale de la tache, par exemple de l'ordre de la longueur d'onde ou la demi-longueur d'onde du faisceau laser.

L'espacement en profondeur est quant à lui dicté par la possibilité de lire ensuite les informations. On peut dire que l'espacement entre strates doit être de plusieurs fois ou plusieurs dizaines de fois la dimension verticale de la tache de focalisation pour qu'une strate donnée ne crée pas d'interférences d'informations avec les strates voisines. De cette manière, l'énergie lumineuse, suffisamment concentrée en un point d'une strate déterminée pour produire une variation d'indice, est défocalisée dans les autres strates et ne produit pas de variations d'indice.

Le système d'enregistrement décrit en référence à la figure 2 n'est donné qu'à titre d'exemple : on peut très bien prévoir qu'il n'y a qu'un seul miroir et un seul modulateur optique; l'ensemble de l'optique de focalisation est alors déplaçable par rapport à la surface du disque pour focaliser le faisceau à une profondeur variable sous la surface du disque. Et les strates sont enregistrées successivement plutôt que simultanément.

On peut prévoir que le disque comporte une couche supérieure de résine dans laquelle on gravera, par photolithographie, une piste de lecture d'informations qui servira de référence pour les strates intérieures : les informations de chaque strate seront localisées sur des pistes situées au dessous des pistes de référence de la couche de résine photogravée.

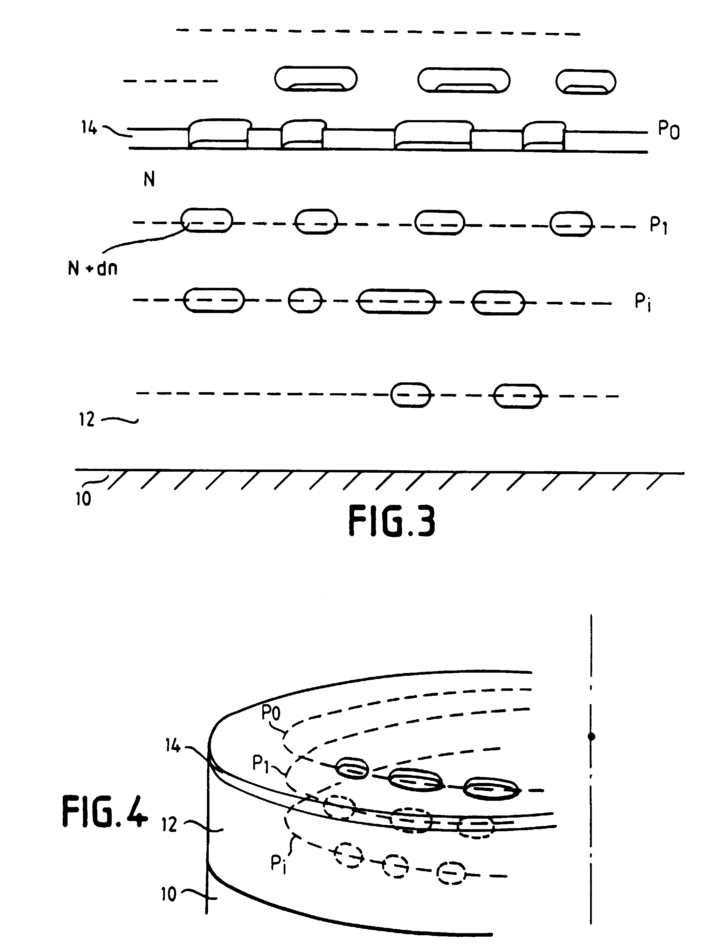

Après enregistrement et développement de la résine photosensible, correspondant par exemple à un plan d'information P0, le disque comporte une structure telle que celle de la figure 3. En surface il y a une piste photogravée (similaire à celle d'un disque optique classique) avec des informations constituées par des trous localisés dans la résine 14; et en profondeur, il y a des pistes réparties dans les différents plans de focalisation Pi et alignées verticalement avec la piste de surface. Le long de ces pistes intérieures au volume se trouvent des éléments d'information photoinduits, caractérisés par un indice N+dn localement différent de l'indice N de la couche.

La figure 4 représente une vue schématique en perspective correspondant à la structure de la figure 3.

On notera ici que certains matériaux peuvent subir un traitement thermique qui augmente la différence relative entre l'indice N+dn localement modifié et l'indice N du reste de la couche.

On a ainsi réalisé un disque contenant une grande quantité d'informations. Il peut servir tel quel pour être lu et utilisé, mais il peut aussi servir de disque maître pour une reproduction en série de disques contenant les mêmes informations.

Pour la lecture du disque maître ainsi réalisé, ou pour la lecture des disques copies obtenus par duplication du disque maître, on procède de la manière suivante :

Le disque est introduit dans un système de lecture. ce système comporte des moyens pour focaliser un faisceau laser sur les différentes strates d'information prévues en volume dans la couche transparente recouvrant le disque. On peut avoir un seul faisceau et des moyens de déplacement vertical; ou encore plusieurs faisceaux établissant chacun une tache de focalisation respective. Le faisceau laser a bien entendu une énergie suffisamment faible pour ne pas créer de modifications d'indice dans la couche contenant les informations.

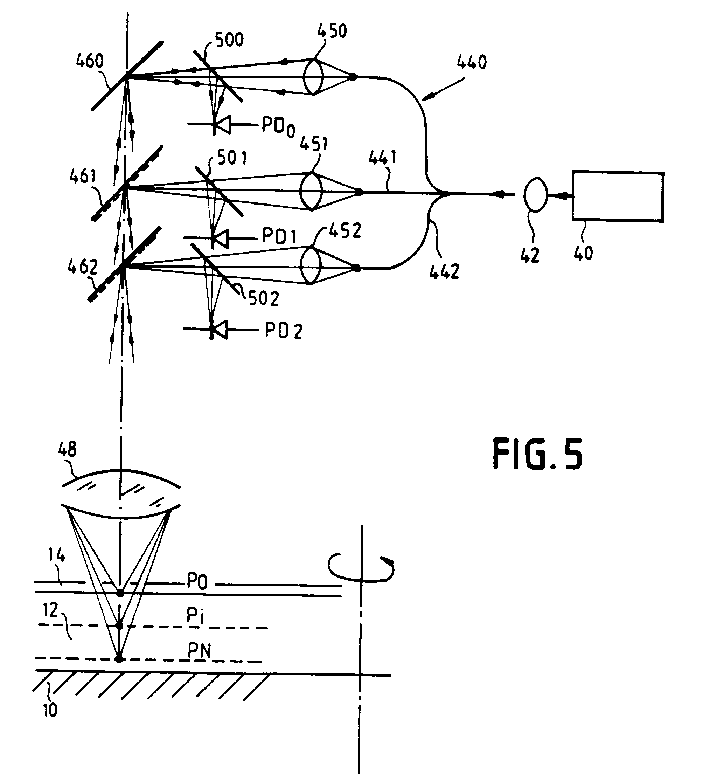

Sur la figure 5, on a représenté un système de lecture avec plusieurs faisceaux et des moyens optiques séparés pour produire les différentes taches de focalisation. Le faisceau est produit par un laser 40 et est divisé par un séparateur 42 en plusieurs faisceaux qui peuvent être guidés par exemple par des fibres optiques 440, 441, etc. vers une optique de focalisation respective 450, 451, 452; cette optique focalise les différents faisceaux sur des miroirs partiellement transparents respectifs 460, 461, 462, d'où ils sont renvoyés vers un objectif 48 qui les focalise dans la couche transparente 12 du disque 10, chacun à une profondeur respective à l'intérieur de la couche (la profondeur correspondant chaque fois à une strate d'informations respective ).

Pour chacun des faisceaux, la présence d'une variation locale d'indice dans la couche produit une réflexion partielle du faisceau vers l'arrière. La portion de faisceau réfléchie à l'endroit de la tache de focalisation est renvoyée vers l'objectif 48 et est focalisée sur le miroir 460, 461, 462, etc. correspondant au faisceau considéré. De là, le faisceau réfléchi est renvoyé vers un miroir semi-transparent auxiliaire respectif 500, 501, 502, etc. interposé entre l'objectif 450, 451, 452, etc. et le miroir 460, 461, 462, etc.

Enfin, le faisceau réfléchi, renvoyé par le miroir auxiliaire respectif, est dirigé sur un photodétecteur PD0, PD1, PD2, etc., chaque photodétecteur correspondant à une strate d'informations respective et fournissant un signal correspondant aux informations lues dans cette strate.

La focalisation forte du faisceau lumineux, produisant des taches de focalisation de dimensions très inférieures à la distance séparant deux strates d'informations, permet de recueillir les informations contenues dans une strate, sans interférences avec les strates voisines ; les strates voisines sont vues de manière "floue" par le faisceau, de sorte que les informations qu'elles contiennent ne perturbent pas significativement la lecture de la strate considérée.

L'asservissement de la tête de lecture sera obtenu par une méthode classique d'asservissement radial et vertical (utilisée dans tous les disques optiques classiques), de préférence en utilisant comme référence la piste superficielle P0 gravée dans la résine 14.

Le système décrit, pour la transmission optique d'un faisceau d'illumination et le retour du faisceau réfléchi n'est donné qu'à titre d'exemple, de multiples autres possibilités pouvant être envisagées, en optique classique ou avec des fibres optiques.

La source de lecture peut être monochrome ou à spectre large, ou encore constituée de plusieurs sources de longueurs d'onde différentes, chaque longueur d'onde étant par exemple assignée à une strate d'information respective; dans ce dernier cas, on pourra filtrer les faisceaux réfléchis pour faire correspondre à chaque photodétecteur uniquement une longueur d'onde bien déterminée.

Lorsque le faisceau laser rencontre, à l'endroit de la tache de focalisation, une variation locale d'indice d'environ 10%, on peut estimer qu'environ 1 millième de l'énergie du faisceau est réfléchi vers l'arrière. C'est cette fraction qui est recueillie par les photodétecteurs pour donner un signal de sortie représentant les informations lues.

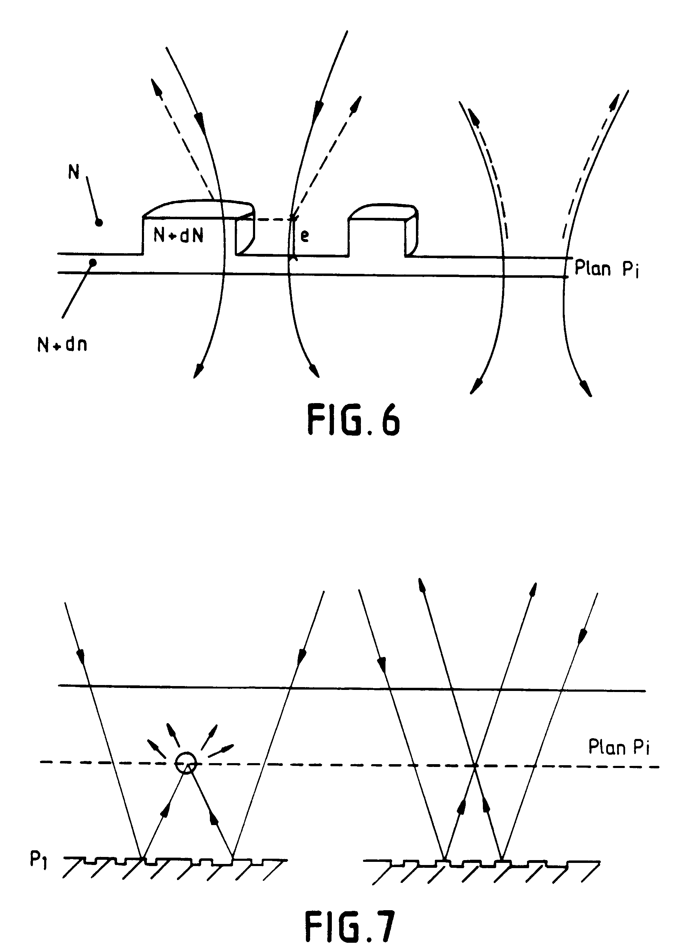

Etant donné que cette valeur est relativement faible, on préfèrera, utiliser des méthodes de détection différentielles utilisant le déphasage de lumière introduit par la réflexion du faisceau sur des plans de variation d'indice présentant localement des surépaisseurs. Cette méthode est explicitée ci-dessous, en référence à la figure 6.

Une strate d'informations à l'intérieur de la couche transparente 12 est définie par une couche interne continue dans laquelle l'indice de réfraction a été modifié en continu au moment de l'enregistrement. L'indice est N+dn dans cette couche. De plus, la couche d'indice N+dn présente des surépaisseurs locales dont la présence ou l'absence représente l'information enregistrée.

Lorsque le faisceau laser de lecture se réfléchit complètement sur la couche d'indice N+dn ou sur une surépaisseur, de la lumière est renvoyée vers l'arrière. Mais lorsque le faisceau se réfléchit à moitié sur la couche et à moitié sur une surépaisseur locale, la portion de faisceau réfléchie par la surépaisseur est déphasée par rapport à celle qui est réfléchie par le reste de la couche. Ce déphasage est lié au rapport entre la hauteur e de la surépaisseur et la longueur d'onde; il est aussi proportionnel à la variation d'indice dn. Si on choisit correctement la hauteur e des surépaisseurs en fonction de la longueur d'onde et de la variation d'indice dn, on obtient un déphasage de 180°. Il y a alors un bref instant pendant lequel le faisceau, en rotation relative par rapport aux surépaisseurs, passe sur un bord d'une surépaisseur, la moitié du faisceau étant réfléchie avec un déphasage de 180° par rapport à l'autre moitié. Il y a "extinction" momentanée du faisceau réfléchi, et cette extinction peut être détectée.

Une autre méthode de lecture peut être utilisée; elle est illustrée à la figure 7.

Elle consiste à utiliser une lecture par réflexion sur la face arrière de la couche transparente, de telle manière que les informations soient analysées en fait en transmission : la tache de focalisation est produite dans le plan des informations mais après réflexion sur la face arrière. En l'absence de modification locale d'indice, la totalité du faisceau traverse la couche et est ramenée vers les photodétecteurs; en présence d'une modification locale d'indice, le faisceau est diffracté et une quantité d'énergie moindre est recuelllie par les photodétecteurs. La piste de résine photogravée peut d'ailleurs être située sur cette face arrière comme cela est représenté sur la figure 7.

Etant donné qu'il sera souvent souhaitable de produire en série des disques portant des informations identiques, on pourra procéder de deux manières.

La première manière consiste à produire les disques tous de la manière qui a été décrite en référence à la figure 2, avec un laser d'inscription qui écrit point par point dans chacune des strates de la couche transparente.

La deuxième manière, préférable pour des grandes séries, consiste à produire un disque maître à partir d'une inscription laser comme à la figure 2, puis à produire par duplication en série des disques copies à partir du disque maître. Le procédé de duplication est alors global et non point par point.

Pour la duplication en série par un procédé global, on procéde selon l'invention de la manière suivante : le disque maître est utilisé pour produire un hologramme de volume dans un matériau photosensible (qui peut d'ailleurs être fixé par développement chimique de manière à devenir ultérieurement insensible à la lumière). L'hologramme réalisé, éclairé par une onde plane de lumière cohérente à forte énergie, permet de reconstituer une image tridimensionnelle du disque maître avec les informations qu'il contient ; cette image est projetée dans un disque copie recouvert d'une couche transparente à variation d'indice photoinduite. Cette projection à forte énergie lumineuse provoque les modifications locales d'indice désirées dans la couche transparente du disque copie, reproduisant ainsi globalement une copie fidèle du disque maître avec toutes les informations qu'il contient.

Si le disque maître comporte une piste superficielle réalisée par gravure d'une résine photosensible et non par variation d'indice photoinduite, on réalisera de préférence des disques copies comportant une piste superficielle correspondante obtenue par pressage. La technique de pressage est la technique classique pour les disques optiques numériques actuels. Le pressage peut être effectué avant ou après exposition à travers l'hologramme.

## Revendications

1. Système de stockage optique d'informations, comprenant un support d'informations stockées en plusieurs strates dans ce support et des moyens de lecture de ces informations, ces moyens comportant des moyens optiques (40-42) pour focaliser un faisceau lumineux sur une strate sélectionnée sans le focaliser sur les autres strates, caractérisé en ce que les strates d'informations sont formées dans le volume d'une couche (12) de matériau transparent à variation photoinduite d'un indice optique, les informations étant constituées par des modifications locales, dans lesdites strates, de l'indice optique du matériau.

2. Système de stockage optique d'informations selon la revendication 1, caractérisé en ce que la couche de matériau transparent (12) est formée sur un disque plan susceptible d'être mis en rotation autour d'un axe perpendiculaire à son plan.

3. Système de stockage selon l'une des revendications 1 et 2, caractérisé en ce qu'il comporte des moyens pour déplacer le plan focal des moyens optiques d'une strate à une autre.

4. Procédé pour l'écriture d'informations dans un système de stockage selon l'une des revendications 1 à 3, caractérisé en ce qu'il comporte des étapes consistant à:
- réaliser un disque maître pourvu d'une couche comprenant plusieurs strates d'informations,
- réaliser un hologramme de cette couche,
- reconstituer une image tridimensionnelle de cette couche avec les différentes strates d'information, à partir de l'hologramme et d'un faisceau de lumière cohérente, l'image reconstituée étant établie dans une couche transparente en matériau à variation photoinduite d'un indice optique formée sur un support, pour enregistrer dans cette couche des variations locales d'indice optique en strates superposées correspondant aux informations du disque maître.

5. Support d'informations pour un système selon l'une des revendications 1 à 3, caractérisé en ce qu'il est constitué d'un disque plan recouvert d'une couche transparente en matériau à variation photoinduite de l'indice optique comportant des informations individuelles stockées sous forme de modifications locales d'indice optique et réparties selon plusieurs strates à l'intérieur du volume de la couche, chaque strate correspondant à une série respective d'informations et les strates suffisamment étant écartées les unes des autres pour qu'il soit possible de focaliser un faisceau laser de lecture des informations sur une strate sans le focaliser sur les autres strates.

6. Support selon la revendication 5, caractérisé en ce que le disque comporte une face avec une piste gravée servant de référence pour l'accès aux informations contenues dans le volume de la couche transparente.

## Patentansprüche

1. Optisches Informationsspeichersystem mit einem Träger für in mehreren Lagen innerhalb dieses Trägers gespeicherten Informationen und mit Mitteln zum Lesen dieser Informationen, wobei diese Mittel optische Mittel (40-42) zur Fokussierung eines Lichtstrahls auf eine ausgewählte Lage aufweisen, ohne daß dabei eine Fokussierung in den anderen Lagen erfolgt, dadurch gekennzeichnet, daß die Informationslagen im Volumen einer Schicht (12) aus transparentem Material mit durch Licht induzierter Veränderung eines optischen Index ausgebildet sind, wobei die Informationen von örtlichen Veränderungen des Brechungsindex des Materials in diesen Lagen gebildet werden.

2. Optisches Informationsspeichersystem nach Anspruch 1, dadurch gekennzeichnet, daß die Schicht aus transparentem Material (12) auf einer ebenen Scheibe ausgebildet ist, die um eine Achse senkrecht zu ihrer Ebene in Drehung versetzt werden kann.

3. Speichersystem nach einem der Ansprüche 1 und 2, dadurch gekennzeichnet, daß es Mittel aufweist, um die Brennebene der optischen Mittel von einer Lage zu einer anderen verschieben zu können.

4. Verfahren zum Einschreiben von Informationen in ein Informationsspeichersystem nach einem der Ansprüche 1 bis 3, dadurch gekennzeichnet, daß es folgende Verfahrensschritte aufweist:
- Herstellung einer Mutterscheibe mit einer Schicht, die mehrere Informationslagen enthält,
- Herstellung eines Hologramms dieser Schicht,
- Wiedergabe eines dreidimensionalen Bilds dieser Schicht mit den verschiedenen Informationslagen aufgrund des Hologramms und mithilfe eines kohärenten Lichtstrahls, wobei das erzeugte Bild in einer auf einem Träger ausgebildeten transparenten Schicht aus einem Material mit einer durch Licht induzierten Veränderung eines optischen Index entsteht, um in dieser Schicht örtliche Veränderungen des optischen Index in übereinanderliegenden Lagen entsprechend den Informationen in der Mutterscheibe zu speichern.

5. Informationsträger für ein System nach einem der Ansprüche 1 bis 3, dadurch gekennzeichnet, daß er aus einer ebenen Scheibe besteht, die mit einer transparenten Schicht aus einem Material mit durch Licht induzierter Veränderung des optischen Index bedeckt ist, welche individuelle gespeicherte Informationen in Form von örtlichen Veränderungen des optischen Index enthält, und zwar in mehreren Lagen innerhalb des Volumens der Schicht verteilt, wobei jede Lage einer jeweiligen Serie von Informationen entspricht und die Lagen ausreichend weit voneinander entfernt sind, daß es möglich ist, einen Laserstrahl zum Auslesen der Informationen auf eine Lage zu fokussieren, ohne ihn zugleich auf die anderen Lagen zu fokussieren.

6. Träger nach Anspruch 5, dadurch gekennzeichnet, daß die Scheibe auf einer Seite eine gravierte Spur trägt, die als Bezugsspur für den Zugang zu den im Volumen der transparenten Schicht enthaltenen Informationen dient.

## Claims

1. Optical information storage system comprising a storage medium for items of information stored in several strata within this storage medium and means of reading these items of information, these means including optical means (40-42) for focusing a light beam onto a selected stratum without focusing it onto the other strata, characterized in that the information strata are formed within the volume of a layer (12) of transparent material having a photoinduced variation in an optical index, the items of information consisting of local modifications, in the said strata, of the optical index of the material.

2. Optical information storage system according to Claim 1, characterized in that the layer (12) of transparent material is formed on a plane disk capable of being rotated about an axis perpendicular to its plane.

3. Storage system according to one of Claims 1 and 2, characterized in that it includes means for moving the focal plane of the optical means from one stratum to another.

4. Process for writing items of information to a storage system according to one of Claims 1 to 3, characterized in that it includes steps consisting in:
- producing a master disk provided with a layer comprising several information strata;
- producing a hologram of this layer;
- reconstructing a three-dimensional image of this layer with the various information strata, using the hologram and a beam of coherent light, the reconstructed image being created in a transparent layer of material having a photoinduced variation in an optical index, formed on a storage medium, in order to record within this layer local variations in optical index in superimposed strata corresponding to the items of information on the master disk.

5. Information storage medium for a system according to one of Claims 1 to 3, characterized in that it consists of a plane disk covered with a transparent layer of material having a photoinduced variation in the optical index, containing individual items of information which are stored in the form of local modifications in optical index and are distributed in several strata within the volume of the layer, each stratum corresponding to a respective series of items of information and the strata being sufficiently far apart so that it is possible to focus an information-reading laser beam onto one stratum without focusing it onto the other strata.

6. Storage medium according to Claim 5, characterized in that the disk has a face with an etched track serving as a reference for access to the items of information contained within the volume of the transparent layer.
